# EUROPÄISCHE PATENTSCHRIFT

(11) **EP 2 212 575 B1**
(45) Veröffentlichungstag und Bekanntmachung des Hinweises auf die Patenterteilung: **24.04.2013**
(21) Anmeldenummer: 08800462.7
(22) Anmeldetag: 06.10.2008
(51) Int. Cl.: F16D 1/095, F16D 1/091, B23P 11/02

(54) **VORRICHTUNG ZUR REIBSCHLÜSSIGEN KUPPLUNG ZWEIER KOAXIALER BAUTEILE**
DEVICE FOR FRICTIONALLY COUPLING TWO COAXIAL COMPONENTS
DISPOSITIF D'ACCOUPLEMENT PAR FROTTEMENT ENTRE DEUX COMPOSANTS COAXIAUX

(30) Priorität: 17.10.2007 CH 16202007
(43) Veröffentlichungstag der Anmeldung: 04.08.2010
(73) Patentinhaber: Wernecke, Jan, 6467 Schattdorf (CH)
(72) Erfinder: Wernecke, Jan, 6467 Schattdorf (CH)
(74) Vertreter: Schneider Feldmann AG Patent- und Markenanwälte
(86) Internationale Anmeldenummer: PCT/CH2008/000416
(87) Internationale Veröffentlichungsnummer: WO 2009/049437

(56) Entgegenhaltungen:
- EP-A- 1 302 685
- WO-A-83/02083
- FR-A- 2 707 202
- GB-A- 1 542 116
- US-A- 2 840 399
- US-A- 3 143 366
- US-A- 3 228 102

## Beschreibung

### Beschreibung

### Technisches Gebiet

Die Erfindung betrifft eine Vorrichtung zur reibschlüssigen Kupplung zweier Wellen , gemäss dem Oberbegriff des unabhängigen Patentanspruchs.

### Stand der Technik

Für die drehfeste Verbindung von zwei koaxialen Bauteilen, beispielsweise von zwei Wellen oder einer Welle und einer Nabe, sind verschiedene Möglichkeiten bekannt. Um eine einfache und schnelle Montage, Wartung und Demontage zu ermöglichen, müssen solche Verbindungen zudem zerstörungsfrei lösbar sein.
Verbreitet sind unter anderem reibschlüssige Verbindungen mittels eines konischen Ölpressverbands. Bei diesem wird beispielsweise eine Nabe mit einer kegelförmigen Innenbohrung auf eine Welle mit einer kegelförmigen Mantelfläche aufgepresst, wobei in den Zwischenspalt Öl eingepresst wird, wodurch das Aussenstück elastisch aufgeweitet wird, so dass es auf den inneren Kegel geschoben werden kann. Nach Erreichen der gewünschten Position wird der Öldruck im Spalt abgelassen, wodurch sich das Aussenstück zusammenzieht und auf das Innenstück setzt. Aufgrund der anhaltenden elastischen Verformung des Aussenstücks resultiert ein Anpressdruck zwischen den Kontaktflächen des Innenstücks und des Aussenstücks. Das maximal mit einem solchen Ölpressverband übertragbare Drehmoment ist proportional zu diesem Anpressdruck, der Kontaktfläche, und dem Haftreibungskoeffizienten zwischen den Flächen.
Die Fertigung von Wellen mit kegelförmigem Zapfen und Naben mit konischer Innenbohrung ist aufwendig und teuer, und bei einer fehlerhaften Fertigung kann das gesamte, mitunter sehr grosse und schwere Bauteil unbrauchbar werden. Zudem werden oft die zu verbindenden Bauteile von verschiedenen Herstellern geliefert, was eine präzise Koordination voraussetzt. Es ist deshalb oft kostengünstiger, die beiden Bauteile mit zylindrischen Innen- bzw. Aussenflächen zu versehen, und diese mittels einer entsprechenden Ölpressverband-Kupplungsvorrichtung zu verbinden. Eine solche besteht aus einer inneren Hülse, mit zylindrischem Innenmantel und kegelförmigem Aussenmantel, und einer äusseren Hülse, mit kegelförmigem Innenmantel und zylinderförmigem Aussenmantel. Die äussere Hülse wird dann auf die innere Hülse aufgepresst, wodurch eine reibschlüssige Verbindung zum einen zwischen beiden Hülsenteilen und zum anderen zwischen innerer Hülse und Welle bzw. äusserer Hülse und Nabe entsteht. Gegebenenfalls wird auch nur die innere oder die äussere Hülse verwendet, die dann direkt mit der Kegelfläche des anderen Bauteils zusammenwirkt. Analog wird eine Kupplungsvorrichtung mit innerer und äusserer Hülse auch zur reibschlüssigen Verbindung zweier koaxialer Wellen mit zylindrischen Zapfen verwendet, wobei die innere Hülse über den sich gegenüber liegenden Wellenenden angeordnet wird, so dass nach dem Aufpressen der äussern Hülse die beiden Wellen reibschlüssig mit der Kupplungsvorrichtung, und damit miteinander, verbunden sind. Konische Ölpressverbandkupplungen der vorgenannten Art werden beispielsweise von der Firma Voith Turbo, Heidenheim, Deutschland unter der Bezeichnung "Hycon" angeboten.
Das Aufpressen der konischen Nabe bzw. der äusseren Hülse auf das konische Innenstück erfolgt bevorzugt mittels eines Hydraulikwerkzeugs, welches das äussere konische Teil in Richtung des zunehmenden Umfangs auf den inneren Kegel schieben oder ziehen kann. Um das äussere Bauteil und gegebenenfalls die äussere Hülse aufzuweiten, wird hydraulisch Öl in den Kegelspalt gepresst, so dass die beiden Kegelflächen nicht mehr aufeinander aufliegen. Der entsprechende Ölspaltdruck resultiert in einer Axialkraft in Richtung des abnehmenden Umfangs des inneren Kegels. Diese ist das Produkt aus Ölspaltdruck und Projektion der Kegelmantelfläche entlang der Längsrichtung. Ein solches hydraulisches Werkzeug ist beispielsweise in EP 1775490 A1 gezeigt, in dem eine hydraulischen Mutter auf eine Welle aufgeschraubt wird, und mittels eines druckbeaufschlagten Ringkolbens ein Wälzlager auf ein konisches Wellenende aufpresst.
Es sind auch Systeme bekannt, in welchen das hydraulische Werkzeug in die Kupplungsvorrichtung integriert ist. So bietet beispielsweise SKF Coupling Systems AB, Hofors, Schweden, unter der Bezeichnung "OKC" und "OKF" eine solche Kupplungsvorrichtung an. Diese besteht aus konischer Innenhülse, konischer Aussenhülse und einem Ringkolben, welcher am schmalen Ende mit der inneren Hülse verbunden ist, und zusammen mit der äusseren Hülse eine Hydraulikkammer bildet.

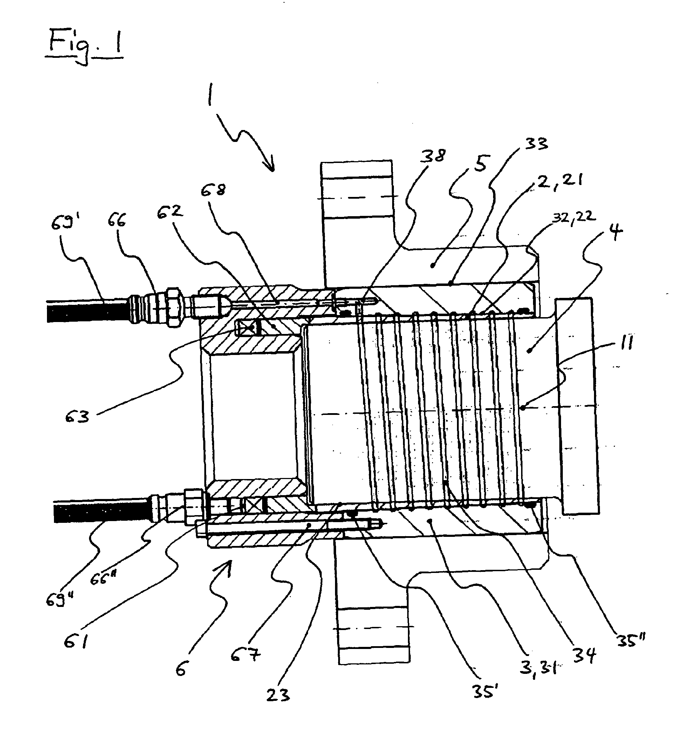

Figur 1 zeigt zur Erläuterung eine Schnittansicht einer Kupplungsvorrichtung, wie sie aus dem Stand der Technik bekannt ist. Zum Aufpressen einer Nabe 5 auf eine Welle 4 wird ein erstes, inneres Kupplungsteil 2 in Form einer inneren Hülse in einem zweites äusseren Kupplungsteil 3 in Form einer äusseren Hülse 31 angeordnet, und diese mittels Schrauben 67 formschlüssig mit dem Hydraulikwerkzeug 6 verbunden. Im Hydraulikwerkzeug 6 ist ein Ringkolben 62 mit einer Dichtung 63 angeordnet, welcher sich noch in der eingefahrenen Position befindet. Ringkolben 62 und der Körper des Hydraulikwerkzeugs 6 bilden eine ringförmige Hydraulikkammer 61. Der Ringkolben 62 liegt auf der inneren Hülse 21 auf. Zur Montage wird nun die Nabe 5 auf die äussere Hülse 31 aufgebracht, und die Welle 4 in die innere Hülse 21 eingefahren. Über eine Hydraulikzufuhrleitung 69" wird nun die Hydraulikkammer 62 mit einem Druck pₐₓ beaufschlagt, wodurch eine axial nach links wirkende Kraft auf das Hydraulikwerkzeug 6 und damit auf die äussere Hülse 31 erzeugt wird. Über eine zweite Hydraulikzufuhrleitung 69' und Hydraulikleitung 68, 38 wird anschliessend eine helixförmige Verteilnut 34 auf der kegelförmigen Innenfläche 33 der äusseren Hülse 31 mit einem Druck *p*ₛₚ beaufschlagt, so dass zwischen den Kegelflächen 22, 32 ein Ölspalt entsteht, und die äussere Hülse 31, zusammen mit der Nabe 5, elastisch aufgeweitet wird. Die äussere Hülse 31 schwimmt nun auf der inneren Hülse 21 auf, und verschiebt sich aufgrund der nach links wirkenden Zugkraft des Hydraulikwerkzeugs nach links, bis sich die Zugkraft und die dieser entgegen wirkende Kraft aufgrund des Ölspalts entsprechen. Die zwei Hydraulikdruckwerte *p*ₐₓ und *p*ₛₚ werden nun solange abwechslungsweise erhöht, bis die Nabe 5 die gewünschte Endposition erreicht hat. Der Ölspalt-Druck wird abschliessend abgelassen, wodurch sich die äussere Hülse 31 zusammenzieht, und auf die innere Hülse 21 setzt. Nach einer gewissen Wartezeit ist der Spalt zwischen den Kegelflächen 22, 32 ölfrei, und der axiale Hydraulikdruck wird abgelassen. Es resultiert ein reibschlüssiger Presssitz der Nabe 5 und der beiden Hülsen 31, 21 auf der Welle 4. Das Hydraulikwerkzeug 6 kann anschliessend entfernt werden. Die Demontage verläuft im wesentlichen umgekehrt.

Bei den bekannten konischen Ölpressverband-Kupplungsvorrichtungen kann es beim Ablassen des Ölspaltdrucks nach Erreichen der Endposition geschehen, dass aufgrund der sinkenden axialen Kraft des Ölspaltdrucks bei gleich bleibender Zugkraft die Hülse 31 noch einmal sprungartig nach links verrutscht, was zum einen zu einer Überschreitung der Toleranzen für die Dehnung von äusserer Hülse 31 und Nabe 5 führen kann, und zum anderen zu einem nicht senkrechten, unkontrollierten Setzen der Kegelflächen 22, 32 aufeinander, was eine Beschädigung der Oberflächen verursachen kann. Dabei können Kratzer entstehen, welche die Leckage an den Spaltenden vergrössern, was sogar dazu führen kann, dass der nötige Ölspaltdruck für eine spätere Demontage nicht mehr erreicht werden kann. Die Kupplungsvorrichtung lässt sich in einem solchen Fall nicht mehr zerstörungsfrei lösen. Das gleiche Problem kann auch bei der Demontage einer Kupplungsvorrichtung auftreten, wobei die äussere Hülse 31 beim Erhöhen des Ölspaltdrucks in beide Richtungen verrutschen kann, je nachdem, ob die Kraft des Hydraulikwerkzeugs zu gross oder zu klein ist.
Da bei unregelmässig geformten Aussenteilen, insbesondere bei Naben 5, die radiale Elastizität über die Länge nicht identisch ist, kann es sein, dass der Ölspalt aufgrund der unterschiedlichen Anpresskräfte unregelmässig dick wird. In solchen Fällen werden vorteilhaft an den beiden Enden der äusseren Hülse 31 umlaufende Dichtungen 35', 35" angeordnet, um die Leckage an den Spaltenden zu minimieren, und so einen höheren Ölspaltdruck zu erreichen.
Bei anderen bekannten konischen Ölpressverband-Kupplungsvorrichtungen wird zur Erhöhung des Haftreibungskoeffizienten die innere Hülse 21 beschichtet, womit eine Erhöhung des Haftreibungskoeffizienten von µ=0.14 (Stahl/Stahl) bzw. µ=0.18 (Stahl/Stahl entfettet) auf bis µ=0.3 möglich wird. Dieser verbesserte Wert erlaubt die Übertragung grösserer Drehmomente bzw. die kleinere Auslegung von Kupplungsvorrichtungen. Beim Aufpressen der äusseren Hülse, und insbesondere bei einem sprungartigen Verrutschen beim Ablassen des Öldrucks, wie es obenstehend beschrieben worden ist, kann die spezielle Beschichtung die aus Kunststoff bestehenden Dichtungen 35', 35" zerstören. Die Erhöhung des Haftreibungskoeffizienten ist deshalb wenig kompatibel mit der Verwendung von Dichtungen zur Erhöhung des maximalen Ölspaltdrucks.

### Darstellung der Erfindung

Aufgabe der Erfindung ist es, eine Vorrichtung zur reibschlüssigen Kupplung zweier koaxialer Bauteile zur Verfügung zu stellen, welche die oben genannten Nachteile nicht aufweist.

Diese und andere Aufgaben werden gelöst durch eine erfindungsgemässe Vorrichtung gemäss dem unabhängigen Anspruch. Weitere bevorzugte Ausführungsformen sind in den abhängigen Ansprüchen gegeben.

### Kurze Beschreibung der Zeichnungen

Im folgenden wird die erfindungsgemässe Vorrichtung anhand von Zeichnungen erläutert.
Figur 1 zeigt eine Schnittansicht einer Kupplungsvorrichtung nach dem Stand der Technik.
Die Figuren 2, 4 und 6 zeigen Schnittansichten von möglichen Gestaltungsformen einer Vorrichtung, bei welcher zwei Hülsen vorgesehen sind. Die Figuren 3, 5 und 7 zeigen mögliche Gestaltungsformen einer Vorrichtung analog zu den Figuren, 2, 4, 6, bei denen die Nabe eine konische Innenmantelfläche aufweist.
Figuren 8 und 9 zeigen zwei mögliche Gestaltungsformen einer erfindungsgemässen Vorrichtung, zur Kupplung zweier koaxialer Wellen.
Figur 10 zeigt eine mögliche Ausführungsform einer äusseren und inneren Hülse einer erfindungsgemässen Vorrichtung, mit haftreibungserhöhenden Beschichtungen.

### Ausführung der Erfindung

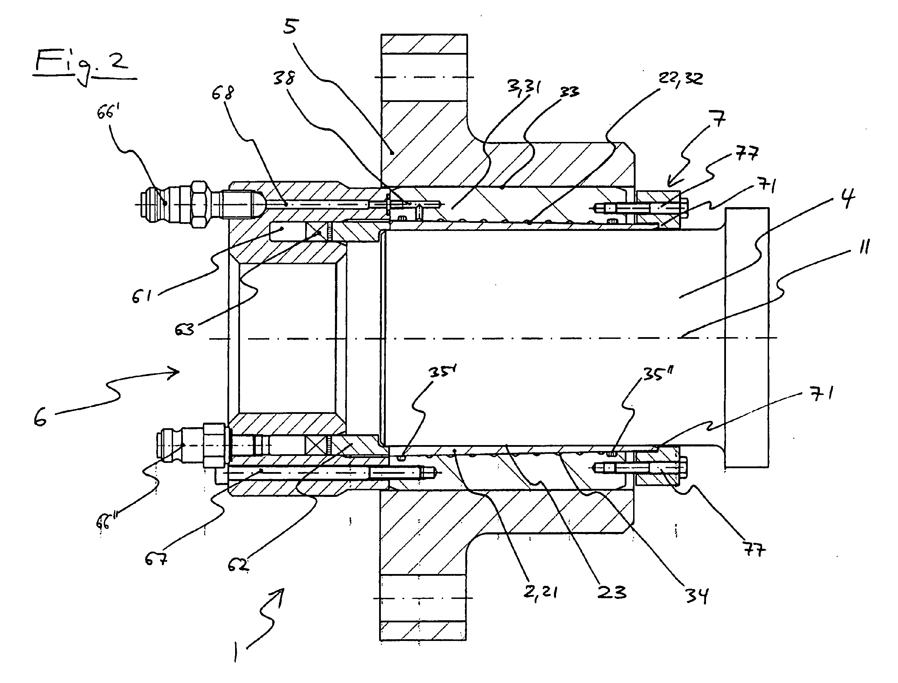

Die Figur 2 zeigt in Schnittansicht eine Kupplungsvorrichtung 1, welche im gezeigten Beispiel eine Welle 4 und eine Nabe 5 reibschlüssig verbindet.
Ein erstes, inneres Kupplungsteil 2 in Form einer Hülse 21 mit zylindrischer Innenfläche 23 und konischer Aussenmantelfläche 22 ist auf der Welle 4 angeordnet. Auf der inneren Hülse 21 wiederum ist ein zweites, äusseres Kupplungsteil 3 in Form einer Hülse 31 mit konischer Innenmantelfläche 32 und zylindrischer Aussenfläche 33 angeordnet. Auf der äusseren Hülse 31 ist schliesslich die Nabe 5 angeordnet, welche hier eine Flanschnabe ist. Ein Hydraulikwerkzeug 6, nämlich eine Hydraulikmutter, ist mittels Verbindungselementen 67, nämlich einer Mehrzahl von Schrauben 67, mit der äusseren Hülse 31 formschlüssig verbunden, und ist in der Lage, auf die äussere Hülse 31 eine nach links in Längsrichtung wirkende Zugkraft auszuüben. Die einzelnen Elemente der gezeigten Vorrichtung 1 entsprechen denjenigen der Vorrichtung aus Figur 1, auf deren diesbezügliche Erläuterungen hiermit verwiesen wird.
In der Vorrichtung 1 in Figur 2 ist die äussere Hülse 31 in der Endposition, in welcher sie nach Ablassen des Ölspaltdrucks verbleiben soll. Um zu verhindern, dass die äussere Hülse dabei ungewollt weiter nach links verrutscht, gezogen vom Hydraulikwerkzeug 6, ist ein Sicherungsmittel 7 vorhanden. Im gezeigten Beispiel ist dies ein auf der Welle 4 angeordneter Ring 7, welcher sich mit einem umlaufenden Absatz als Anschlagelement 71 auf einer endständigen Kante der inneren Hülse 21 abstützt. Der Ring 7 ist über Verbindungsmittel in der Form einer Mehrzahl von Schrauben 77 formschlüssig mit der äusseren Hülse 31 verbunden.
Während der Montage selber ist das Sicherungsmittel 7 nicht mit der äusseren Hülse 31 verbunden. Nach dem Erreichen der Endposition der äusseren Hülse 31 und der Nabe 5 wird der Ring nach links verschoben, bis er an der inneren Hülse 21 ansteht. Anschliessend werden die Schrauben 77 durch Bohrungen im Ring eingeführt, und in entsprechende Gewindelöcher der äusseren Hülse 31 eingeschraubt und leicht angezogen, bis kein Spiel mehr zwischen Ring 7 und innerer Hülse 21 mehr vorhanden ist. Anschliessend kann der Ölspaltdruck *p*ₛₚ gleichmässig bis auf Null reduziert werden. Obwohl nun die nach rechts wirkende Kraft des Ölspaltdrucks kleiner wird, bei gleich bleibendem Hydraulikdruck *p*_{ax,1} und Zugkraft nach links, kann die äussere Hülse nicht mehr nach links verrutschen, weil dies durch das Sicherungsmittel 7 verhindert wird.
Nach einer Wartezeit, in der das Öl vollständig aus dem Kegelspalt ausfliessen kann, kann der Hydraulikdruck *p*ₐₓ abgelassen und das Hydraulikwerkzeug 6 entfernt werden. Das Sicherungsmittel 7 verbleibt bevorzugt an Ort und Stelle. Es kann jedoch auch aus zwei oder mehr Segmenten zusammengesetzt realisiert werden, damit es nach der Montage wieder entfernt werden kann.
Bei der Demontage der erfindungsgemässen Vorrichtung 1 wird das Hydraulikwerkzeug 6 und, falls noch nicht vorhanden, das Sicherungsmittel 7 an der äusseren Hülse 41 formschlüssig befestigt. Anschliessend wird der Hydraulikdruck des Werkzeugs 6 *p*ₐₓ auf einen maximalen Wert *p*_{ax,2} hochgefahren, wobei dieser Druck bevorzugt höher ist als der höchste axiale Druck *p*_{ax,1} bei der Montage. Die dadurch entstehende Zugkraft wird zu Beginn vom Reibschluss zwischen den Hülsen 21, 31 aufgenommen. Anschliessend wird der Ölspaltdruck auf einen Wert *p*_{sp,1} erhöht, bei welchem ein ausreichender Ölspalt entsteht. Die Zugkraft wird nun vom Sicherungselement 7 aufgenommen, und damit ein Verrutschen der Hülse 31 nach links durch das Sicherungsmittel 7 verunmöglicht. Ein Verrutschen nach rechts wiederum wird durch die starke axiale Zugkraft des Hydraulikwerkzeugs 6 verhindert, wobei die Zugkraft natürlich grösser sein muss als die Kraft des Ölspaltdrucks. Anschliessend kann langsam der Hydraulikdruck *p*ₐₓ reduziert werden. Wenn nun die Zugkraft kleiner wird als die entgegengesetz gerichtete Kraft des Ölspaltdrucks, beginnt sich die äussere Hülse 31 nach rechts zu bewegen, bis zu einer Demontage-Position. Da dabei von Anfang an ein Ölspalt vorhanden ist, können keine Beschädigungen auftreten.

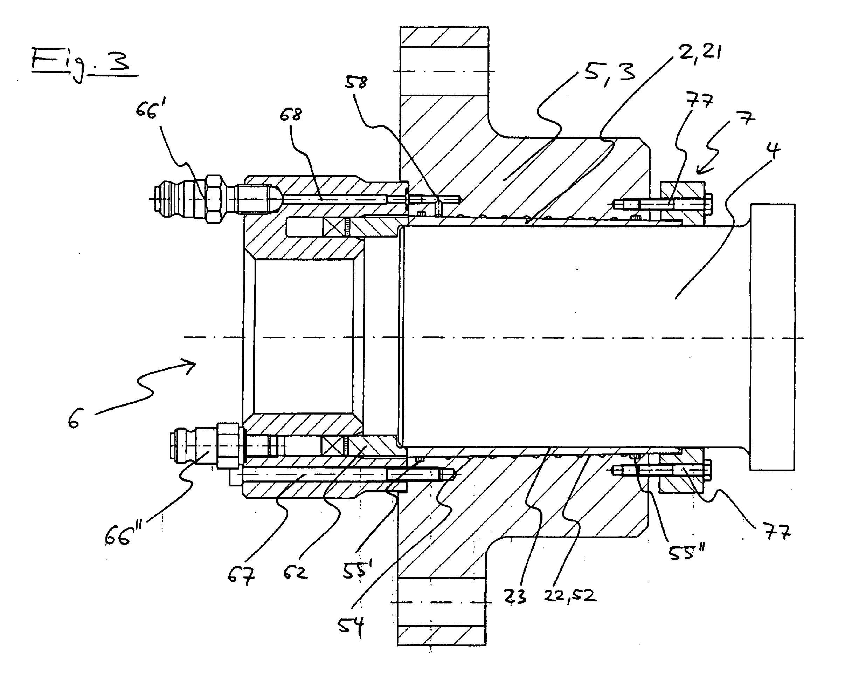

Figur 3 zeigt eine nicht erfindungsgemässe Vorrichtung 1, welche im wesentlichen der Vorrichtung aus Figur 2 entspricht. Im gezeigten Beispiel ist jedoch keine äussere Hülse vorhanden, sondern die Nabe 5 selber ist das äussere Kupplungsteil 3, und verfügt über eine konische innere Mantelfläche 52, mit Verteilnut 54, Hydraulikleitung 58, und Dichtungen 55', 55".
Selbstverständlich lässt sich eine erfindungsgemässe Vorrichtung analog auch mit einer Welle mit konischem Zapfen realisieren, wobei dann dieser konische Zapfen selber das innere Kupplungsteil 2 ist.

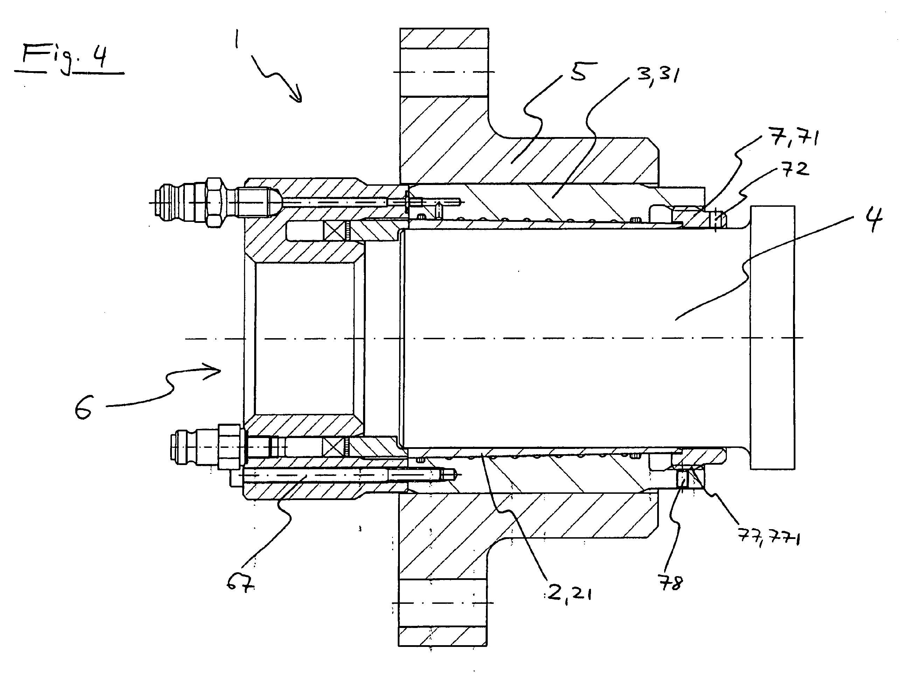

Figur 4 zeigt eine weitere mögliche Ausführungsform einer Kupplungsvorrichtung, welche analog zu derjenigen aus Figur 2 aufgebaut ist. In diesem Fall ist jedoch das Sicherungsmittel ein Sicherungsring 7, welcher mit einem Aussengewinde 771 versehen ist, das in ein entsprechendes Innengewinde der äusseren Hülse 31 eingreift. Der Ring 7 verfügt wiederum über einen umlaufenden Absatz 71, welcher auf der endständigen Kante der inneren Hülse 21 anliegt. Die Dimensionierung des Sicherungsrings 7 sollte so gewählt sein, dass er sowohl in der Anfangsposition als auch in der Endposition leicht drehbar ist, und sich insbesondere nicht auf der Welle 4 verklemmt. Zur Betätigung des Sicherungsrings 7 verfügt das gezeigte Beispiel über radiale Bohrungen 72, über die der Ring mit einem Stift oder Hakenschlüssel gedreht werden kann. Alternativ können auch axial verlaufende Nuten, stirnseitige axiale Bohrungen oder stirnseitige radiale Nuten verwendet werden.
Die Bedienung erfolgt analog zu den bereits besprochenen Ausführungsformen. Vor dem Ablassen des Ölspalt-Hydraulikdrucks am Ende Montagevorgangs, bzw. vor dem Aufbauen des axialen Hydraulikdrucks des hydraulischen Werkzeugs 6 und des Ölspalt-Hydraulikdrucks bei der Demontage, wird der Sicherungsring 7 in das Innengewinde der äusseren Hülse 31 eingedreht, bis der Absatz 71 auf der Kante der inneren Hülse 21 aufsteht. Die äussere Hülse 31 kann sich jetzt nicht mehr weiter nach links auf die innere Hülse 21 schieben. Nach der Montage verbleibt der Sicherungsring 7 bevorzugt an Ort und Stelle. Um ein Losdrehen des Sicherungsrings während des Drehens der Welle zu verhindern, ist zu diesem Zweck in der äusseren Hülse 31 ein Gewindebolzen 78 in einer entsprechenden radialen Bohrung vorgesehen, welcher auf das Aussengewinde 771 gedreht wird, und so den Sicherungsring 7 fixiert.

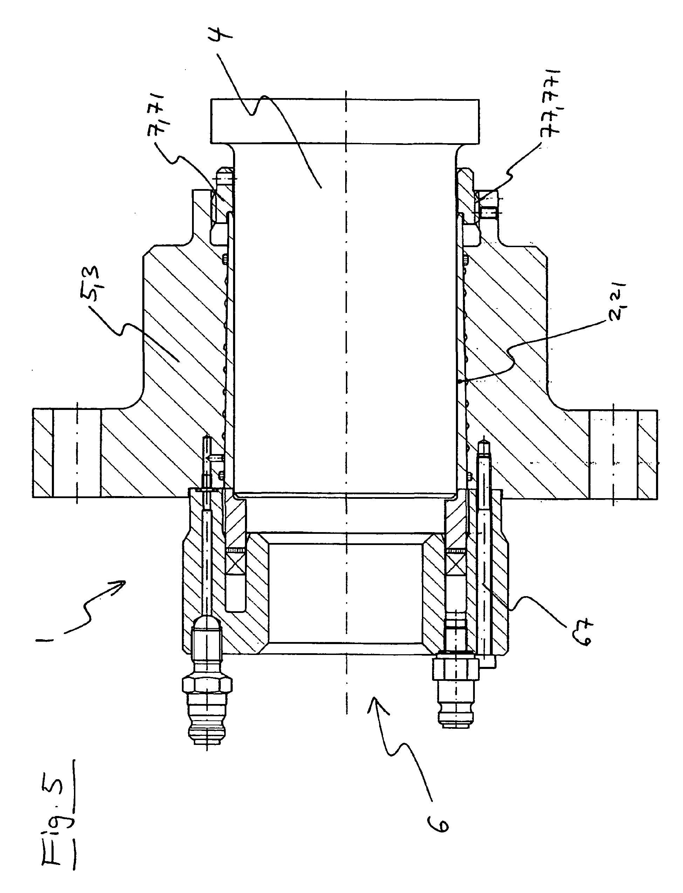

Figur 5 zeigt die Vorrichtung aus Figur 4 mit einer konischen Nabe 5 statt einer äusseren Hülse 31 als äusseres Kupplungsteil 3.

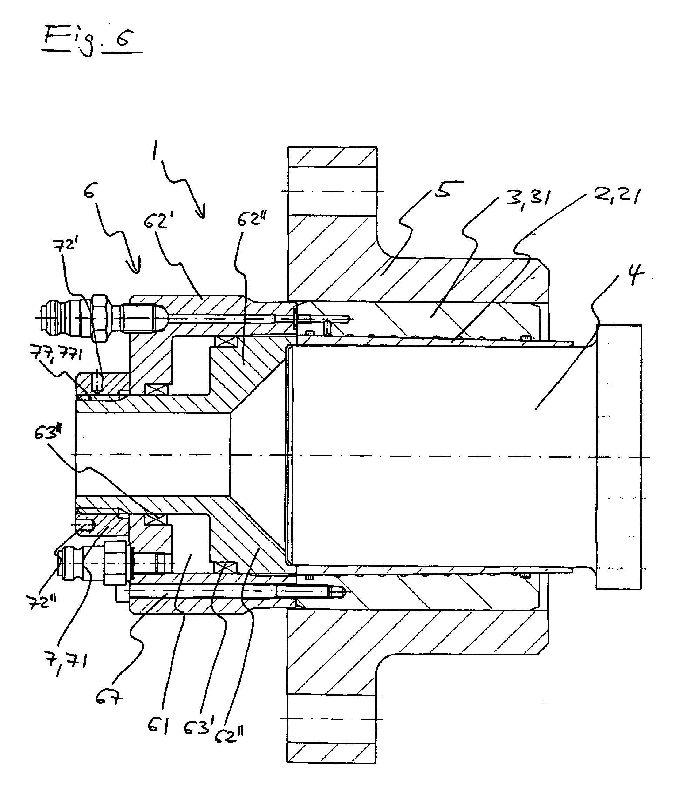

Figur 6 zeigt noch eine weitere Variante einer Vorrichtung 1, bei welcher das Sicherungsmittel 7 am Hydraulikwerkzeug 6 angeordnet ist. Dieses besteht im Wesentlichen aus zwei Teilen 62', 62", welche eine ringförmige Hydraulikkammer 61 bilden. Das innere Teil 62" stütz sich auf der inneren Hülse 21 ab, während das äussere Teil 62' mittels Schrauben 67 formschlüssig mit der äusseren Hülse 31 verbunden ist. Das innere Teil 62" weist an seinem der Welle 4 abgewandten Ende ein Aussengewinde oder ein unterbrochenes, helixförmiges Bajonettprofil 771 auf. Auf dieses kann nach Erreichen der Endposition der äusseren Hülse 31 das Sicherungsmittel in Form einer Sicherungsmutter 7 aufgebracht und bündig auf dass äussere Teil 62' aufgedreht werden, so dass eine weitere Verschiebung des äusseren Teils 62' gegenüber dem inneren Teil 62" nach links, und damit auch der äusseren Hülse 31 gegenüber der inneren Hülse 21, nicht mehr möglich ist. Zur Betätigung kann die Sicherungsmutter 7 mit radialen 72' oder axialen 72" Bohrungen versehen werden.
Diese Variante hat den besonderen Vorteil, dass die äussere Hülse 31 einfacher aufgebaut werden kann, insbesondere ohne axiale Bohrungen oder Innengewinde, und dass kein Sicherungsmittel 7 bei der montierten Kupplungsvorrichtung 1 verbleibt, sondern beim abnehmbaren, vielfach verwendbaren Hydraulikwerkzeug 6, was die Herstellungskosten senkt.

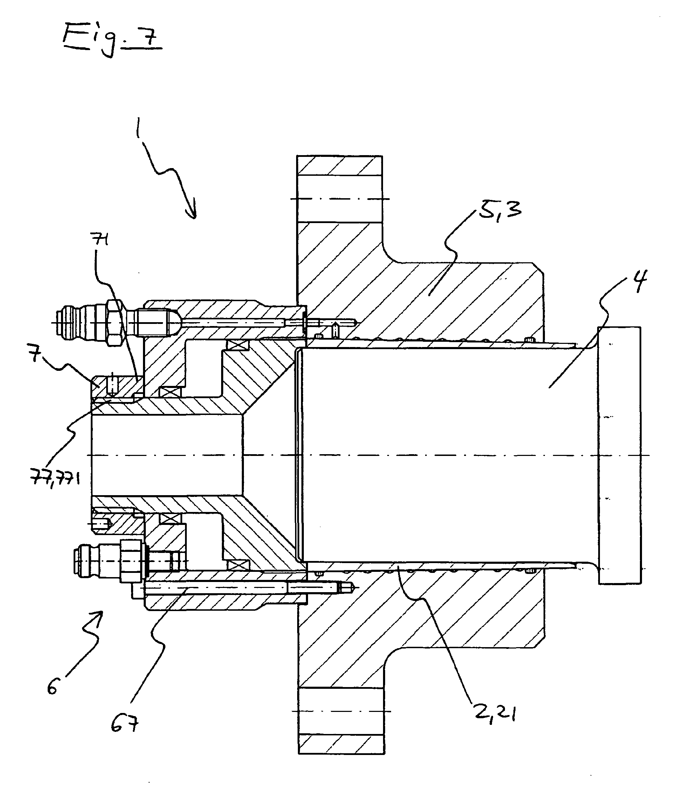

Figur 7 wiederum zeigt die Vorrichtung aus Figur 6 mit einer konischen Nabe 3 als äusserem Kupplungsteil 3.

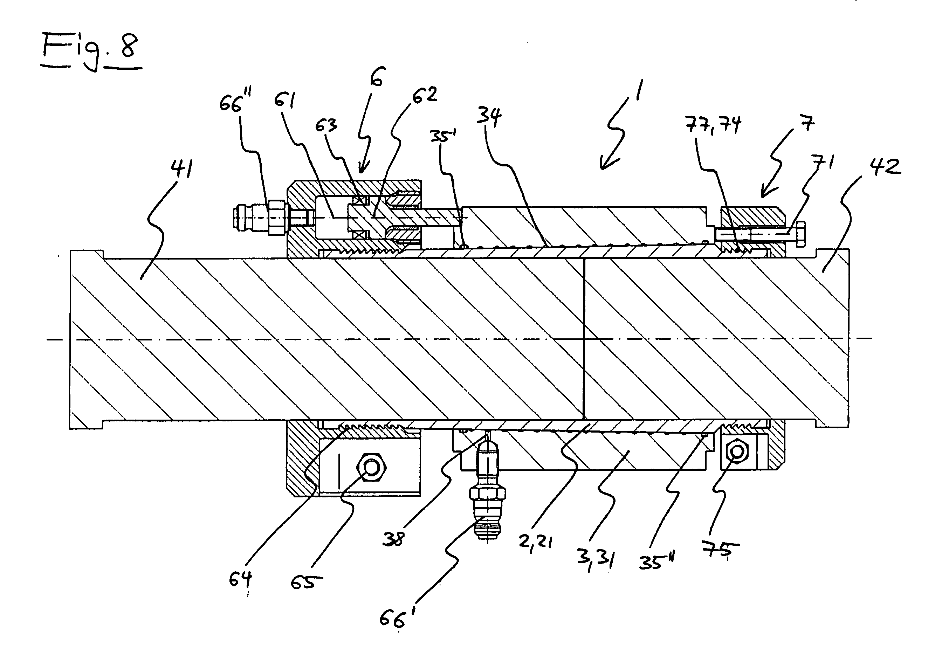

Figur 8 zeigt ein erfindungsgemässes Kupplungsteil 1 zur Verbindung zweier koaxialer Wellen 41, 42. Das hydraulische Werkzeug 6 ist mehrteilig ausgestaltet, und wird um die erste Welle 41 herum zusammengebaut, wobei die einzelnen Teile über Verbindungselemente 65, insbesondere Schraubverbindungen, verbunden werden. Das Hydraulikwerkzeug 6 ist mit der inneren Hülse 21 formschlüssig verbunden, im gezeigten Beispiel über ein Sägezahnprofil 64. Alternativ kann zu diesem Zweck natürlich auch ein Gewinde oder eine andere geeignete Befestigungsmethode verwendet werden. Im gezeigten Beispiel wird die äussere Hülse 31 nach rechts auf die innere Hülse 21 geschoben, mittels einer Mehrzahl von miteinander druckverbundenen Hydraulikzylindern 61, welche auf der äusseren Hülse 31 aufstehende Kolben 62 betätigen, und so eine axiale Schubkraft nach rechts erzeugen. Am gegenüber liegenden Ende der inneren Hülse 21 ist ein Sicherungsmittel in Form eines ebenfalls mehrteiligen Sicherungsrings 7 angeordnet, welcher über ein Sägezahnprofil 74 mit der inneren Hülse 21 verbunden ist. Nach dem Erreichen der Endposition der äusseren Hülse 31 werden Schrauben 71 in entsprechende axiale Bohrungen des Sicherungsrings 7 eingedreht, bis sie auf der äusseren Hülse 31 aufstehen, und so ein weiteres Verrutschen der Hülse nach rechts verhindern. Nach Abschluss der Montage können sowohl das Hydraulikwerkzeug 6 als auch das Sicherungsmittel 7 entfernt und für die Montage weiterer Kupplungen verwendet werden.

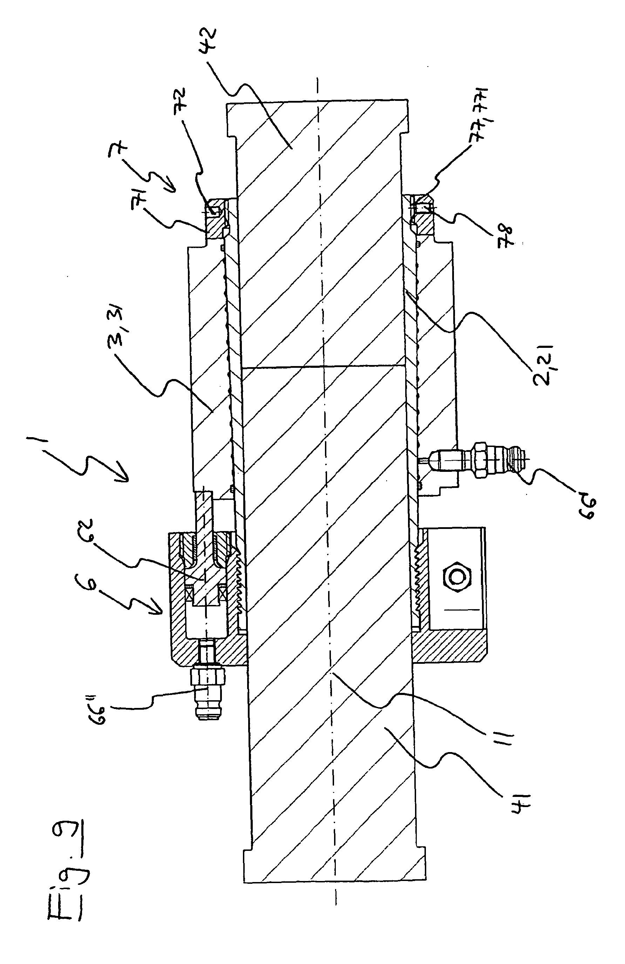

Figur 9 zeigt ebenfalls ein erfindungsgemässes Kupplungsteil 1 zur Verbindung zweier koaxialer Wellen 41, 42, analog zu Figur 8. In diesem Fall ist jedoch das Sicherungsmittel als einstückige Kontermutter 7 ausgeführt, welche auf ein entsprechendes Aussengewinde 771 der inneren Hülse 21 aufgedreht wird, bis sie auf der äusseren Hülse 31 aufsteht, und so formschlüssig ein weiteres Verrutschen der äusseren Hülse 31 nach rechts verunmöglicht. In dieser Variante verbleibt das Sicherungsmittel 7 nach der Montage an Ort und Stelle, und wird mittels eines Gewindebolzens 78 gegen ein Losdrehen gesichert.

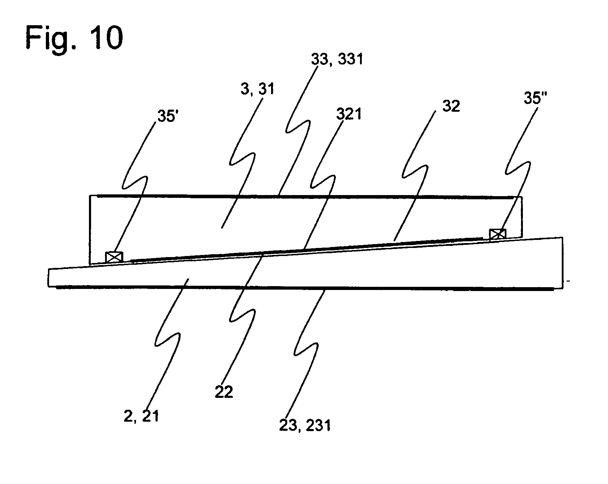

Figur 10 zeigt eine Gestaltungsform einer äusseren Hülse 31 und inneren Hülse 21 einer erfindungsgemässen Vorrichtung, mit einer haftreibungserhöhenden Beschichtung 321 der inneren Mantelfläche. Die innere Mantelfläche 32 der äusseren Hülse 31 weist zwei Dichtungen 35', 35" auf, welche an den beiden längsseitigen Enden angeordnet sind. Zwischen den beiden Dichtungen ist die Mantelfläche 32 mit einer Beschichtung 321 versehen, welche die Haftreibung zwischen Mantelfläche 32 der äusseren Hülse 31 und der Mantelfläche 22 der inneren Hülse 21 erhöht. Geeignet ist beispielsweise eine Beschichtung mit Hartmetallpartikeln mittels Flammsprühverfahren, bei welcher die Metallteile thermisch nicht belastet werden. Die äussere konische Mantelfläche 22 der inneren Hülse 21 ist nicht beschichtet. Es lassen sich so Haftreibungskoeffizienten von µ = 0.5-0.7 erreichen. Eine derartige Anordnung hat zudem den Vorteil, dass auch bei einem versehentlichen Verrutschen der Hülsenteile zueinander, insbesondere beim Ablassen bzw. Aufbauen des Ölspaltdrucks bei der Montage bzw. Demontage, die Dichtungen 35', 35" niemals mit der haftreibungserhöhenden, rauen Beschichtung 321 in Kontakt kommen und dadurch beschädigt werden können. Zu weiteren Steigerung des Reibschlusses können auch die zylindrischen Flächen 23, 33 der Hülsen 21, 31 mit entsprechenden Beschichtungen 231, 331 versehen werden, wobei hier die ganze Fläche beschichtet werden kann, da zwischen den zylindrischen Flächen 23, 33 und den zu koppelnden Bauteilen 4, 5 keinerlei transversale Verschiebung unter Pressdruck stattfindet und stattfinden sollen.

### Liste der Bezugszeichen

| | |
|---|---|
| 1 | Kupplungsvorrichtung |
| 11 | Drehachse |
| 2 | erstes, inneres Kupplungsteil |
| 21 | innere Hülse |
| 22 | kegelförmige äussere Mantelfläche |
| 23 | zylindrische Innenfläche |
| 231 | Haftreibungserhöhende Beschichtung |
| 3 | zweites, äusseres Kupplungsteil |
| 31 | äussere Hülse |
| 32 | kegelförmige, innere Mantelfläche |
| 321 | Haftreibungserhöhende Beschichtung |
| 33 | zylindrische Aussenfläche |
| 331 | Haftreibungserhöhende Beschichtung |
| 34 | Verteilnut |
| 35', 35" | Dichtung |
| 38 | Hydraulikleitung |
| 4 | Welle |
| 41 | erste Welle |
| 42 | zweite Welle |
| 5 | Nabe |
| 52 | kegelförmige, innere Mantelfläche |
| 54 | Verteilnut |
| 55', 55" | Dichtung |
| 58 | Hydraulikleitung |
| 6 | Hydraulikwerkzeug |
| 61 | Hydraulikkammer |
| 62, 62', 62" | Kolbenelement |
| 63, 63', 63" | Dichtung |
| 64 | Sägezahnprofil |
| 65 | Verbindungsmittel |
| 66', 66" | Hydraulikanschluss |
| 67 | Verbindungsmittel |
| 68 | Hydraulikleitung |
| 69', 69" | Zufuhrleitung |
| 7 | Sicherungsmittel |
| 71 | Anschlagelement |
| 72, 72', 72" | Bohrung |
| 74 | Sägezahlprofil |
| 75 | Verbindungsmittel |
| 77 | Verbindungsmittel |
| 771 | Gewinde |
| 78 | Gewindebolzen |

## Patentansprüche

1. Vorrichtung (1) zur reibschlüssigen Kupplung zweier Wellen (41, 42),
mit einem ersten, inneren Kupplungsteil (2) mit kegelförmiger äusserer Mantelfläche (22) und einem zweiten, äusseren Kupplungsteil (3) mit kegelförmiger innerer, Mantelfläche (32), wobei die beiden Kupplungsteile (2,3) dazu geeignet sind, in Richtung einer Längsachse (11) reversibel derart ineinander geschoben und dabei in radialer Richtung elastisch verformt zu werden, dass die kegelförmigen Mantelflächen (22, 32) aufeinander aufliegen, und die zwei Wellen ( 41, 42) aufgrund der durch die elastische Verformung der Kupplungsteile (2, 3) verursachten radialen Kräfte über die Kupplungsteile (2, 3) miteinander reibschlüssig verbindbar sind;
**dadurch gekennzeichnet, dass**
das äussere Kupplungsteil (3) an seinen beiden Längsenden auf der kegelförmigen Mantelfläche (32) je mindestens eine umlaufende Dichtung (35', 35") aufweist, und die entsprechende dazwischen liegende, Mantelfläche (32) mit einer den Haftreibungskoeffizienten erhöhenden Beschichtung (321) versehen ist.

2. Vorrichtung nach Anspruch 1, **dadurch gekennzeichnet, dass** eine zylindrische Innenfläche (23) eines ersten Kupplungsteils (2, 21) und/oder eine zylindrische Aussenfläche (33) eines zweiten Kupplungsteils (3, 31) mit einer den Haftreibungskoeffizienten erhöhenden Beschichtung (231, 331) versehen ist.

3. Vorrichtung nach Anspruch 1 oder 2, **dadurch gekennzeichnet, dass** die den Haftreibungskoeffizienten erhöhenden Beschichtungen (321, 231, 331) aus mittels Flammsprühen aufgetragenen Hartmetallpartikeln bestehen.

4. Vorrichtung nach einem der Ansprüche 1 bis 3, **gekennzeichnet durch**
ein Hydraulikwerkzeug (6) mit Mitteln (61, 62, 62', 62"), mit welchen in Richtung des zunehmenden Umfangs der Mantelfläche (22) des ersten Kupplungsteils (2) eine auf das zweite Kupplungsteil (3) wirkende axiale Kraft erzeugbar ist; und Hydraulikmittel (34, 54, 66', 68, 58, 38), mit welchen ein ölgefüllter Spalt zwischen den beiden Mantelflächen (22, 32) erzeugbar ist, welcher eine reibungsarme Verschiebung der beiden Kupplungsteile (2, 3) zueinander erlaubt.

5. Vorrichtung nach Anspruch 4, **gekennzeichnet durch**
Sicherungsmittel (7), mit welchen eine maximal mögliche Verschiebungsposition des zweiten Kupplungsteils (3, 31, 5) in Richtung des zunehmenden Umfangs der Mantelfläche (22) des ersten Kupplungsteils (2) einstellbar ist.

6. Vorrichtung nach Anspruch 5, **dadurch gekennzeichnet, dass** mit den Sicherungsmitteln (7) das zweite Kupplungsteil (3, 31, 5) in Richtung des zunehmenden Umfangs der Mantelfläche (22) des ersten Kupplungsteils (2) formschlüssig fixierbar ist.

7. Vorrichtung nach Anspruch 5, **dadurch gekennzeichnet, dass** das Sicherungsmittel (7) derart mit dem Hydraulikwerkzeug (6) zusammenwirkt, dass ein mit dem zweiten Kupplungsteil (3, 31, 5) verbindbares Teil (62') des Hydraulikwerkzeugs (6) in Richtung des zunehmenden Umfangs der Mantelfläche (22) des ersten Kupplungsteils (2) formschlüssig fixierbar ist.

## Claims

1. A device (1) for the frictionally-connected coupling of two shafts (41, 42),
having a first, inner coupling part (2) with conical outer lateral surface (22) and a second, outer coupling part (3) with conical inner lateral surface (32), wherein the two coupling parts (2, 3) are suited for being reversibly slid into each other in the direction of a longitudinal axis (11) and in the process being elastically deformed in radial direction in such a manner that the conical lateral surfaces (22, 32) lie on top of each other and the two shafts (41, 42) because of the radial forces caused through the elastic deformation of the coupling parts (2, 3) can be frictionally connected to each other via the coupling parts (2, 3) ;
**characterized in that**
the outer coupling part (3) on its two longitudinal ends on the conical lateral surface (32) comprises at least one circumferential seal (35', 35") each and the corresponding lateral surface (32) located in between is provided with a coating (321) which increases the static friction coefficient.

2. The device according to Claim 1, **characterized in that** a cylindrical inner surface (23) of a first coupling part (2, 21) and/or a cylindrical outer surface (33) of a second coupling part (3, 31) are/is provided with a coating (231, 331) which increases the static friction coefficient.

3. The device according to Claim 1 or 2, **characterized in that** the coatings (321, 231, 331) which increase the static friction coefficient consist of hard metal particles applied by means of flame spraying.

4. The device according to any one of the Claims 1 to 3, **characterized by**
a hydraulic tool (6) having means (61, 62, 62', 62") with which in the direction of the increasing circumference of the lateral surface (22) of the first coupling part (2) an axial force acting on the second coupling part (3) can be generated; and hydraulic means (34, 54, 66', 68, 58, 38) with which an oil-filled gap between the two lateral surfaces (22, 32) can be generated, which allows a low-friction displacement of the two coupling parts (2, 3) with respect to each other.

5. The device according to Claim 4, **characterized by**
locking means (7), with which a maximum possible displacement position of the second coupling part (3, 31, 5) in the direction of the increasing circumference of the lateral surface (22) of the first coupling part (2) is adjustable.

6. The device according to Claim 5, **characterized in that** with the locking means (7) the second coupling part (3, 31, 5) can be positively fixed in the direction of the increasing circumference of the lateral surface (22) of the first coupling part (2).

7. The device according to Claim 5, **characterized in that** the locking means (7) interacts with the hydraulic tool (6) in such a manner that a part (62') of the hydraulic tool (6) which can be connected to the second coupling part (3, 31, 5) can be positively fixed in the direction of the increasing circumference of the lateral surface (22) of the first coupling part (2).

## Revendications

1. Dispositif (1) de couplage par conjonction par friction de deux arbres (41, 42),
comportant une première pièce de couplage intérieure (2) avec une surface de gaine extérieure conique (22) et une deuxième pièce de couplage extérieure (3) avec une surface de gaine intérieure conique (32), dans lequel les deux pièces de couplage (2, 3) sont appropriées afin d'être glissées l'une dans l'autre de manière réversible dans la direction d'un axe longitudinal (11) et être ainsi déformée élastiquement dans la direction radiale, de sorte que les surfaces de gaine coniques (22, 32) viennent reposer l'une sur l'autre, et les deux arbres (41, 42) puissent être reliés l'un à l'autre par conjonction par friction en raison des forces radiales causées par la déformation élastique des pièces de couplage (2, 3) sur les pièces de couplage (2, 3) ;
**caractérisé en ce que**
la pièce de couplage extérieure (3) présente à ses deux extrémités longitudinales sur la surface de gaine conique (32) respectivement au moins un joint d'étanchéité circonférentiel (35', 35") et la surface de gaine (32) correspondante intercalée est pourvue d'un revêtement (321) augmentant les coefficients de friction statique.

2. Dispositif selon la revendication 1, **caractérisé en ce qu'**une surface intérieure cylindrique (23) d'une première pièce de couplage (2, 21) et/ou une surface extérieure cylindrique (33) d'une deuxième surface de couplage (3, 31) est pourvue d'un revêtement (231, 331) augmentant les coefficients de friction statique.

3. Dispositif selon les revendications 1 ou 2, **caractérisé en ce que** les revêtements (321, 231, 331) augmentant les coefficients de friction statique sont constitués de particules de métal dur appliquées au moyen d'une projection au pistolet à flamme.

4. Dispositif selon une des revendications 1 à 3, **caractérisé par**
un outil hydraulique (6) pourvu de moyens (61, 62, 62', 62"), avec lesquels une force agissant axialement sur la deuxième pièce de couplage (3) peut être générée dans la direction de la circonférence croissante de la surface de gaine (22) de la première pièce de couplage (2) ; et
de moyens hydrauliques (34, 54, 66', 68, 58, 38), avec lesquels un interstice rempli d'huile peut être produit entre les deux surfaces de gaine (22, 32), lequel permet un décalage exempt de friction des deux pièces de couplage (2, 3) l'une par rapport à l'autre.

5. Dispositif selon la revendication 4, **caractérisé par**
un moyen de fixation (7), avec lequel une position de décalage maximal possible de la deuxième pièce de couplage (3, 31, 5) peut être réglée dans la direction de la circonférence croissante de la surface de gaine (22) de la première pièce de couplage (2).

6. Dispositif selon la revendication 5, **caractérisé en ce qu'**avec les moyens de fixation (7) la deuxième pièce de couplage (3, 31, 5) peut être fixée par conjonction de forme dans la direction de la circonférence croissante de la surface de gaine (22) de la première pièce de couplage (2).

7. Dispositif selon la revendication 5, **caractérisé en ce que** le moyen de fixation (7) coopère avec l'outil hydraulique (6) de telle sorte qu'une pièce (62') de l'outil hydraulique (6) reliable à la deuxième pièce de couplage (3, 31, 5) puisse être fixée par conjonction de forme dans la direction de la circonférence croissante de la surface de gaine (22) de la première pièce de couplage (2).
